# EUROPEAN PATENT APPLICATION

(11) **EP 0 933 198 A2**
(43) Date of publication of application: **04.08.1999**
(21) Application number: 99300132.0
(22) Date of filing: 08.01.1999
(51) Int. Cl.: B32B 27/12, A62D 5/00, A41D 31/02

(54) **Chemical barrier fabric**

(30) Priority: 30.01.1998 GB 9802108
(71) Applicant: Web Dynamics Ltd., Rickmansworth, Hertfordshire WD3 1JJ (GB)
(72) Inventor: Woodbridge, Timothy John, Rickmansworth, Hertfordshire WD3 2DF (GB)
(74) Representative: Ahmad, Sheikh Shakeel

(57) **Abstract**

Chemical barrier fabric having thereon at least two films of the same polymer and the same construction, the two films being laminated together, and the lamination being such that there is no fusion of the polymer at the junction of adjacent faces of the two films. The polymer for the two films may be polypropylene and the chemical barrier fabric may be a spunbond polypropylene fabric.

## Description

This invention relates to chemical barrier fabric, for example for use in the production of garments which protect the wearer against chemicals.

Garments which protect against chemicals are known. The fabric used in the manufacture of such garments is generally made from chemically resistant films or coating, which are applied to woven or non-woven fabrics for strength. The films or coatings need to be of a high quality in order to avoid molecular leakage through pin holes in the films or coatings. The process control involved during the laying down of coatings on to a fabric substrate is difficult, and this tends to require that the coating is relatively thick in order to avoid the pin holes. Coatings are generally greater than 50 microns thick. Such coatings may be of synthetic rubbers such as butyl rubbers and neoprene rubbers. The coatings may also be of polymers such as polyurethane. The production of films presents easier process control and such films are generally manufactured in thicknesses below 50 microns. The films are then laminated to a fabric substrate. The films may be made from polymers such for example as polyethylene, polypropylene, polyurethane, a polyamide, polyesters or ethylvinyl alcohol.

It is known that the level of resistance of polymers to chemical diffusion varies according to the class of chemical involved. For example, polypropylene provides a good barrier to inorganic acids such for example as nitric acid, and the polypropylene may give a breakthrough time greater than 480 minutes. The polypropylene does however provide a poor barrier to nitriles such for example as acrylonitrile where the breakthrough time may be approximately 8 minutes. The varying level of resistance of the polymers to chemical diffusion causes the known chemical barrier fabrics to be manufactured in two ways. The first way uses a single coating or film but this can limit the scope of the garment fabric in that, for example, a garment manufactured from garment fabric having a single layer of polyethylene provides a good barrier to inorganic acids but very little else. The second way involves using a fabric which has been made by combining different polymers to overcome the problem of differing polymer barrier properties against chemicals of different classes. In this second method, problems occur in that with fabric made from different polymers, it is difficult to weld the different polymers together, because each polymer has a different melt point. The fabrics tend to be stiff and noisy and such materials cannot be re-cycled. An additional limitation relates to colour in that the 50 micron co-extruded film may only contain colour in some of the layers, thereby reducing the intensity of the colour in the finished chemical barrier fabric. The combining together of the different polymers is also an expensive process.

It is an aim of the present invention to provide a chemical barrier fabric which obviates or reduces the above mentioned problems.

Accordingly, in one non-limiting embodiment of the present invention there is provided chemical barrier fabric having thereon at least two films of the same polymer and the same construction, the two films being laminated together, and the lamination being such that there is no fusion of the polymer at the junction of the adjacent faces of the two films.

The chemical barrier fabric of the present invention provides a high level of protection to a broad range of chemicals of different classes. This was surprisingly found to be due firstly to the two films being made from a single polymer, secondly to the two films being of the same construction, and thirdly to the lamination being such that there is no fusion of the polymer at the junction of the adjacent faces of the two films.

Preferably, the two films are laminated together by an adhesive. Materials other than adhesives may be employed to effect the lamination. The adhesive may be a hot melt urethane or hot melt ethyl vinyl acetate. The adhesive may be an aqueous pressure sensitives adhesive, a polyvinyl acetate pressure sensitive adhesive, a polyvinyl alcohol acrylic, or a powder bonding adhesive.

The two films may be laminated together by a non-adhesive bond. In this case, hot melt netting may be used as a bonding medium. Alternatively, a tactic meltblown such as ethylvinylacetate may be used as an adhesive medium.

As indicated above, the two films should be of the same construction. Thus, for example, the two films may both be non-porous films or they may both be micro-porous films. The two films should not, for example, be such that one film is a non-porous film and the other film is a micro-porous film.

Preferably, the polymer for the two films is polypropylene. Examples of other polymers that may be used are polyethylene, polyurethane, a polyamide, a polyester and ethyl vinyl alcohol.

The chemical barrier fabric may be of any suitable and appropriate material. Preferably, the chemical barrier fabric is a spunbond polypropylene fabric, that is a fabric made of non-woven polypropylene fibres. The chemical barrier fabric may be made of suitable and appropriate plastics materials other than polypropylene if desired.

The present invention also extends to a garment when produced from the chemical barrier fabric.

In order to assist a full and complete understanding of the invention, reference will now be made to the following Examples which are given for the purposes of illustration only.

### EXAMPLE I

A known commercially available chemical barrier fabric was tested against acetone using European Standard Test EN369. This European Standard Test is the test which measures molecular diffusion of a chemical through a fabric. The known commercially available chemical barrier fabric was a 20 micron polypropylene film which had been thermo bonded to a 35 gram polypropylene spunbond material. Permeation of the acetone through the chemical barrier fabric was measured within one minute.

A second 20 micron polypropylene film was then laminated to the surface of the first 20 micron film. The lamination was effected by an adhesive so that there was no fusion of the polypropylene at the junction of the adjacent faces of the two 20 micron polypropylene films. There was thus produced a chemical barrier fabric in accordance with the present invention. The two polypropylene films were both 20 micron porous films.

The chemical barrier fabric of the present invention was re-rested against acetone using the above mentioned European Standard Test EN369. No permeation of the acetone through the chemical barrier fabric was measured after a time greater than 480 minutes and the test was terminated.

### EXAMPLE II

A piece of the known commercially available chemical barrier fabric used in Example I was tested for permeation by acrylonitrile. Permeation of the acrylonitrile through the chemical barrier fabric was measured within eight minutes. The chemical barrier fabric of the present invention produced in accordance with Example I was then also tested against the acrylonitrile. After a period of 480 minutes, there was no breakthrough of the acrylonitrile and the test was terminated.

### EXAMPLE III

A chemical barrier fabric not in accordance with the present invention was produced by thermobonding an Amoco AP3 breathable film with a water vapour transmission rate of 5000-7000 g/m²/24 hrs - ASTM E 96-90 to a polypropylene spunbound fabric. The chemical barrier fabric was then exposed to 10% sulphuric acid in accordance with European Standard Test EN369. Breakthrough time for the chemical passing through the laminate was recorded at 6 minutes.

The chemical barrier fabric produced above was then modified by having a second piece of the Amoco AP3 breathable film adhesively bonded to it. The second piece of the Amoco AP3 breathable film was bonded to the side of the chemical barrier fabric having the first piece of the Amoco AP3 breathable film. The modified chemical barrier fabric was in accordance with the present invention. The modified chemical barrier fabric was exposed to 50% sulphuric acid in accordance with European Standard Test EN369. No breakthrough of the chemical passing through the modified laminate was recorded, and after 480 minutes the test was terminated.

It is to be appreciated that the embodiments of the invention described above with reference to the Examples have been given by way of example only and that modifications may be effected.

## Claims

1. Chemical barrier fabric having thereon at least two films of the same polymer and the same construction, the two films being laminated together, and the lamination being such that there is no fusion of the polymer at the junction of adjacent faces of the two films.

2. Chemical barrier fabric according to claim 1 in which the two films are laminated together by an adhesive.

3. Chemical barrier fabric according to claim 1 or claim 2 in which the two films are both non-porous films.

4. Chemical barrier fabric according to claim 1 or claim 2 in which the two films are both micro-porous films.

5. Chemical barrier fabric according to any one of the preceding claims in which the polymer for the two films is polypropylene.

6. Chemical barrier fabric according to any one of the preceding claims in which the chemical barrier fabric is a spunbond polypropylene fabric.

7. Chemical barrier fabric substantially as herein described with reference to the Examples.

8. A garment when produced from chemical barrier fabric according to any one of the preceding claims.
